# EUROPEAN PATENT SPECIFICATION

(11) **EP 1 080 635 B1**
(45) Date of publication and mention of the grant of the patent: **26.06.2002**
(21) Application number: 00303989.8
(22) Date of filing: 11.05.2000
(51) Int. Cl.: A01K 5/00, A01D 90/10, A01F 29/12

(54) **Discharge conveyor for mobile storage wagon**
Abfuhrförderanlage für einen Fahrbaren Lagerwagen
Transporteur de décharge pour benne mobile de stockage

(30) Priority: 28.08.1999 GB 9920379
(43) Date of publication of application: 07.03.2001
(73) Proprietor: Trioliet Mullos B.V., 7570 AC Oldenzaal (NL)
(72) Inventor: Van der Plas, Nicolaas, 7576 WB Oldenzaal (NL)
(74) Representative: Orr, William McLean

(56) References cited:
- WO-A-94/24851
- US-A- 5 429 436

## Description

This invention relates generally to a mobile storage wagon having a discharge conveyor for discharging the contents of the wagon to a required discharge location spaced from the side wall of the wagon.

However, in particular, the invention has been developed primarily in connection with a storage wagon or hopper for use in agriculture and intended to hold animal foodstuff which can be discharged when required into animal feeding troughs via the discharge conveyor. Wagons of this type include feed wagons and mixer wagons, and in the latter case they usually have a rotatable auger (horizontal or vertical), or mixer which agitates the animal feed material within the wagon and, if required, mixes any required additive into the animal feed, prior to discharge of the mixture.

Other examples of mobile storage wagon used in agriculture include bale choppers which comprise a hopper which can receive a bale eg of straw, hay or silage, and which have a rotatable chopping device mounted in the hopper and operative to chop-up and / or tear the bale material into smaller portions prior to discharge from the hopper.

There are many different existing types of discharge conveyor used to discharge animal feed material from storage wagons to animal feeding troughs, and in the simplest form can comprise a fixedly mounted substantially horizontal conveyor having an input end located internally of, and near the base of the wagon, and having a discharge end which projects outwardly of the wall of the wagon so as to discharge the contents of the wagon to a required discharge point, spaced from the wagon (typically into an animal feeding trough). This known design, being fixedly mounted, is not capable of adjustment of the position of the discharge end of the conveyor, either vertically or horizontally, and this means that it is not always suitable for use in any particular feeding environment as the space in a stable is often limited, and the height of the feeding troughs can vary from place to place.

It is also known to provide discharge conveyors which are capable of being adjusted in order to vary (a) the height of the discharge end of the conveyor, or (b) the lateral spacing of the discharge end from the side wall of the wagon (hopper). However, in the case of height adjustment of the discharge end, at present this is only possible with an arrangement in which the entire conveyor is pivoted up or down about its inboard end, and this alters the slope of the conveyor, ie the inclination to the horizontal, so as to achieve required alteration in the height of the discharge end of the conveyor. This adjustment therefore does not cause any appreciable horizontal adjustment of the spacing of the discharge end from the wall of the wagon. See e.g. document US-A-5 429 436

In the case of lateral adjustment of the discharge end, at present this is only possible by carrying out movement of the entire conveyor in a substantially horizontal direction relative to the hopper and therefore this does not allow for vertical adjustment of the height of the discharge end of the conveyor. See e.g. document WO-A-94/24851

Bearing in mind that the manoeuvring space available in an animal feed installation is often very restricted (and the required discharge height of the feed material can vary from place to place), there is a clear need, presently not fulfilled, to provide a discharge conveyor arrangement which is capable of effecting, simultaneously with a single adjustment, both vertical and horizontal adjustment of the discharge end of the conveyor.

However, while the invention is particularly applicable to mobile wagons (or wheel supported hoppers) for distributing animal foodstuffs, it should be understood that the invention has general application to mobile storage wagons of the type having a discharge conveyor mounted thereon and operative to discharge the contents of the hopper of the wagon to a required discharge location spaced from the side wall of the hopper.

According to the invention there is provided a mobile storage wagon having a frame, a storage hopper mounted on the frame, and a discharge arrangement to discharge the contents of the hopper to a required discharge location spaced outwardly of the wall of the hopper in which:
(a) the discharge arrangement comprises an endless conveyor having an upper run which is guided between opposed return ends, a first of which is intended to form a receiving end to receive the contents of the hopper and a second of which is intended to form the discharge end of the conveyor; and,
(b) the conveyor is carried by a mounting body which is adjustably mounted on the frame of the wagon in such a way that it is guided to move in a direction generally lengthwise of the conveyor in order to adjust the height of the discharge end of the endless conveyor and the lateral simultaneous spacing of said discharge end from the wall of the hopper.

Therefore, by provision of suitable guidance on the frame of the wagon for the lengthwise movement of the conveyor, it is a simple matter to adjust the position of the discharge end of the conveyor when this is required, and a single adjustment can vary both the height of the discharge end and also the lateral projection of the discharge end from the wall of the hopper.

Preferably, the endless conveyor is reversible, so that either of the return ends can form the discharge end, subject to adjustment of the position of the return end so that it projects from one side of the hopper. This enables the hopper to discharge its contents to either one of two opposed sides as required.

In a preferred arrangement, the discharge conveyor can be adjusted in a direction transverse to the direction of forward travel of the wagon, in which case each return end is capable of moving through a respective outlet opening in the opposed side walls of the hopper.

Conveniently, the return end which forms the receiving end can be adjusted to a position at or near to the centre of the base of the hopper so as to receive the hopper contents, and preferably an internal wall in the hopper is moveable to a position which blocks possible exit for the hopper contents via this (receiving) return end.

The moveable internal wall is preferably arranged to be moved automatically to its blocking position as a consequence of sliding movement of the conveyor to a particular discharge position.

Any suitable means may be provided to achieve required guided movement of the conveyor in a direction generally lengthwise of the conveyor (for the purposes of adjusting (a) the height of the discharge end of the endless conveyor and (b) the lateral spacing of the discharge end from the wall of the hopper). One preferred arrangement comprises provision of a curved guideway on the frame of the wagon along which the mounting body of the conveyor is slidable in order to guide the adjustment movement of the conveyor and thereby effect simultaneous adjustment of (a) the height of the discharge end of the endless conveyor and (b) the lateral spacing of the discharge end from the wall of the hopper.

However, other means of guided adjustment may be provided, such as connection of the frame of the conveyor to two rocker beams so that the conveyor can be swung lengthwise in one direction and / or the other, to achieve a similar result.

In a preferred embodiment, the upper and lower runs of the endless conveyor are constrained to follow curved paths of generally similar curvature to the slideway. Further, it is also preferred that a conveyor-carrying frame which forms the mounting body of the conveyor and which is engagable with the curved guideway also has generally the same curvature so as to make smooth sliding engagement therewith substantially throughout the length of the conveyor during conveyor adjustment.

Conveniently, the conveyor-carrying frame is connected at each end to a respective lever operated mechanism, and an hydraulic ram or other power operated mechanism may be provided in order to effect slideable movement of the conveyor-carrying frame along the curved slideway, and such movement is transmitted to the lever mechanisms, whereby a respective closure flap coupled therewith can automatically move to a position blocking exit for the hopper contents via the return end which has been moved to the receiving end position.

A preferred embodiment of mobile storage wagon according to the invention will now be described in detail, by way of example only, with reference to the accompanying drawings:
Figure 1 is a rear view of a wheel-supported mixing hopper for supplying animal foodstuffs; and having a discharge conveyor which is illustrated in an inoperative or "rest" position;
Figure 2 is a view, similar to Figure 1, but showing the discharge conveyor adjusted to one of a pair of possible laterally projecting discharge positions;
Figure 3 is a side view showing an endless conveyor surface of the discharge conveyor in more detail;
Figure 4 is a further view of the endless conveyor; and,
Figure 5 is a detail enlarged view showing a discharge end of the endless conveyor after displacement to a discharge position projecting from one side of the hopper.

Referring now to the drawings, there will be described, by way of example only, a mobile storage wagon in the form of a wheeled mixer or feeder hopper for supplying animal foodstuff, and which is designated generally by reference 10. The wagon 10 has a main frame 11, supported by a wheel set 12 and a storage hopper 13 mounted on frame 11, and intended to store any required hopper contents, such as animal foodstuff. If required, a horizontally extending auger or mixer may be provided, or a vertically extending auger or mixer, for the purposes of mixing up the hopper contents.

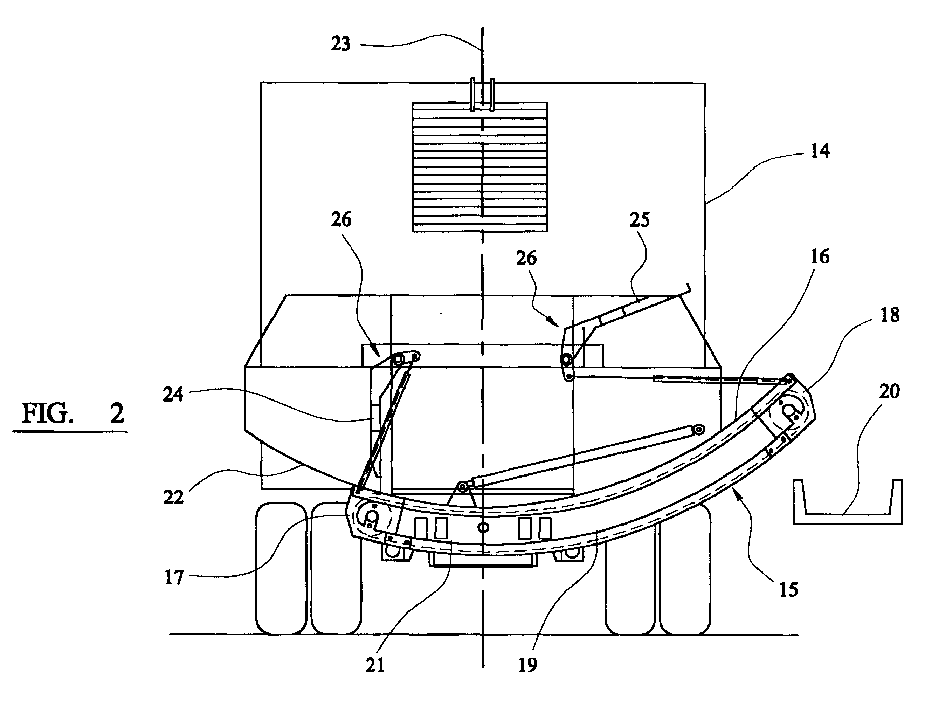

A discharge arrangement is mounted on the frame 11, and serves to discharge the contents of the hopper 13 to a required discharge location spaced outwardly of the wall 14 of the hopper 13, as shown in Figure 2. The discharge arrangement is designated generally by reference 15, and comprises an endless conveyor having an upper run 16 which is guided between opposed return ends 17 and 18, and which then follows a lower return run 19.

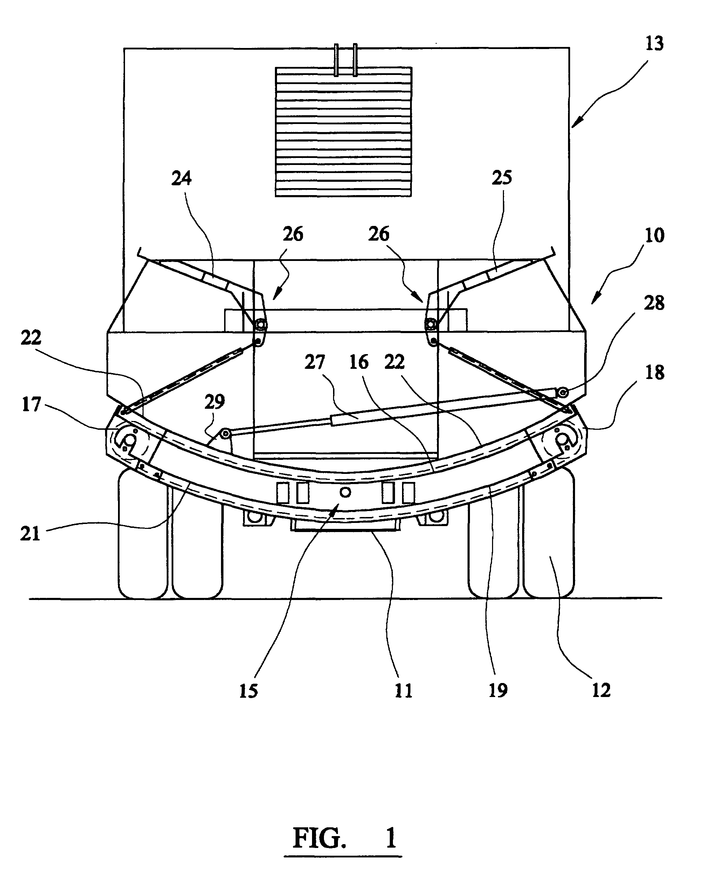

Figure 1 shows the endless conveyor in a rest position, in which it is located substantially within the confines of the hopper 13, and ready to be laterally displaced to one side of the hopper, or the other, depending upon requirements. Figure 2 shows the endless conveyor 15 after slidable adjustment to a discharge position in which the return end 18 forms the discharge end of the conveyor, and the return end 17 forms the receiving end. It will be noted that the discharge end 18 projects laterally from the side wall 14 of the hopper 13, and is also located at a sufficient height above an animal feeding trough 20, so that the hopper contents can easily be discharged into the trough 20 as the wagon 10 travels alongside it.

The conveyor 15 is carried by a mounting body in the form of a conveyor-carrying frame 21, and which is slidably mounted on a curved guideway 22 provided on the frame 11 of the wagon. The mounting body is slidable along the curved guideway 22 in order to adjust the height and also the lateral spacing of the discharge end 18 from the wall of the hopper, as shown in Figure 2. However, it should be understood that the means of guided lengthwise adjustment of the conveyor shown in the drawings is one example only. Other means may be provided to guide the generally lengthwise adjustment of the conveyor, to achieve required height and lateral spacing adjustment of the discharge end of the conveyor from the wall of the hopper.

Therefore, by means of a single adjustment of the endless conveyor along the guideway, there can be simultaneous adjustment of both the height of the discharge end. and also the lateral projection of the discharge end from the wall of the hopper, in order to adjust the wagon to any particular animal feeding environment in which it is to operate.

The endless conveyor 15 is reversible, so that either of the return ends 17 and 18 can form the discharge end, subject to adjustment of the position of the return end so that it projects from one side of the hopper. This enables the hopper 13 to discharge its contents to either one of two opposed sides as required.

In the illustrated embodiment, the discharge conveyor is adjustable in a direction transverse to the direction of forward travel of the wagon, and therefore each return end 17 or 18 is capable of moving through a respective outlet opening in the opposed side walls of the hopper.

As shown in Figure 2, the return end 17 which forms the receiving end of the conveyor can be adjusted to a position at or near to the centre line 23 of the base of the hopper 13 so as to receive the hopper contents, and an internal wall or flap 24 is arranged in the hopper 13 to move to a position in which it blocks exit for the hopper contents via the receiving end of the conveyor.

The moveable internal wall or flap 24 is arranged to be moved automatically to its blocking position as a consequence of slidable movement of the conveyor to a particular discharge position. In the event that the endless conveyor 15 should be adjusted to the left, as shown in Figure 2, then moveable flap 25 will move to the blocking position in relation to the return end 18, which will then form the receiving end, whereas the return end 17 will then project laterally beyond the left hand wall of the hopper, to form the discharge end.

The upper and lower runs 16 and 19 of the endless conveyor are constrained to follow curved paths of generally similar curvature to the slideway 22. Further, the conveyor-carrying frame 21 which engages the curved slideway 22 also has generally the same curvature, so as to make smooth sliding engagement therewith substantially throughout the length of the conveyor during conveyor adjustment.

The opposite ends 17, 18 of the endless conveyor are connected to respective lever-operated mechanisms 26, whereby slidable adjustable movement of the endless conveyor 15 effects pivoting movement of the mechanisms 26, to cause blocking of one or the other of the closure flaps, 24, 25, depending upon which one of the return ends is intended to form the discharge end.

Any suitable power-operated mechanism may be provided, to effect slidable displacement of the endless conveyor, and in the illustrated arrangement comprises hydraulic ram 27 acting between a fixed point 28 on the frame, and a connector point 29 mounted on the conveyor-carrying frame 21.

The described and illustrated embodiment of the invention therefore provides a side conveyor which is curved, and which can be moved laterally, generally following the radius of the curve. In this way, when the conveyor is shifted sideways, the height of the unloading (discharge end) increases. In order to prevent the hopper contents, eg animal fodder, to drop out at the opposite end to the discharge side, there is a lid which is closed at the same time and which is actioned by the displacement of the curved side conveyor frame. In this way, a compact unit is achieved, which is capable of unloading at a substantially increased height, when required, and at minimal additional cost.

The invention may of course be used in all known feed (mixer) wagons and mobile storage hoppers, and the principle of mixing or feeding utilised in the wagon is irrelevant to the invention.

The described embodiment therefore has the following significant advantageous features:
(a) a curved side conveyor, which can be moved laterally, following a curved path, so that the height of the discharge end increases when required:
(b) there are guide means present to guide the curved side conveyor frame in its lateral movement:
(c) there are guide means present to guide an endless belt or chain which forms an endless conveying surface along a desired curved path:
(d) guide means are present along both sides of the upper run of the endless conveyor, and on the upper side of the return run:
(e) the guide means can act on the chain, but in the case of a chain with intermediate bars spaced at a certain distance on intermediate bars: and
(f) a lid is activated, at the opposite end to the discharge side of the wagon, by movement of the conveyor which closes off the opening otherwise available which might allow animal fodder to fall out to the wrong side. In addition, this lid or closure flap prevents access to the unloading side, and therefore shields any external personnel from possible contact with any rotating auger mounted internally of the hopper, this being an important safety aspect.

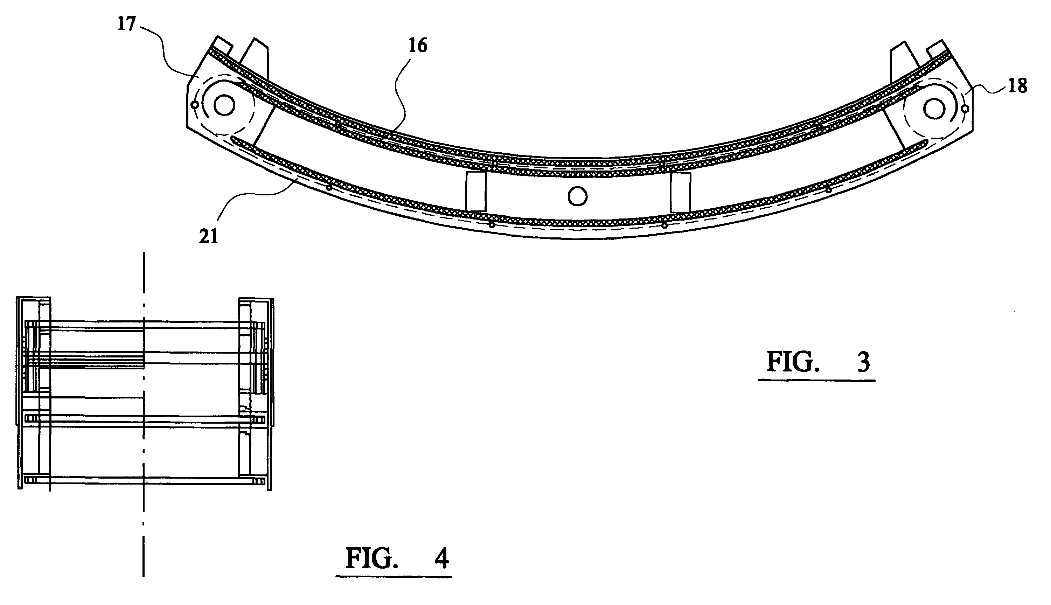

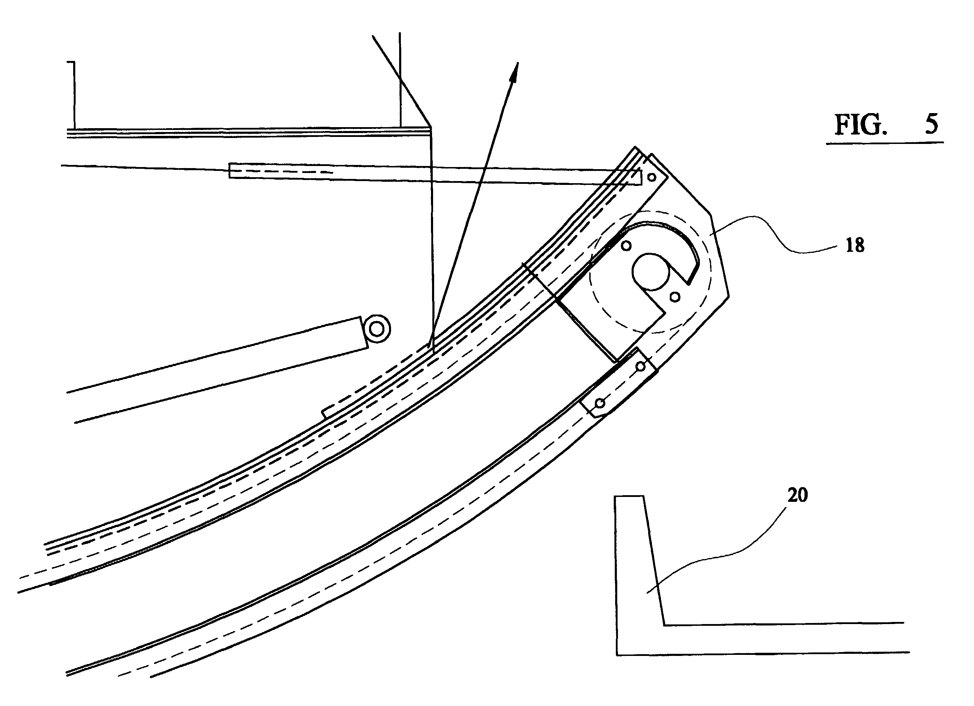

Figures 3, 4 and 5 show in more detail (and to an enlarged scale in Figures 4 and 5) the construction of the conveyor, and its means of guided lengthwise adjustment. It should be understood that other means of guided lengthwise adjustment may be provided (to achieve any required height and lateral spacing adjustment of the discharge end of the conveyor). For example, the frame of the conveyor may be connected to two rocker beams (not shown) so that the conveyor can be swung to the left and / or the right, to achieve a similar result. Furthermore, the rocker beams may be arranged to be adjustable in length e.g. hydraulically, so that the curbed displacement path along which the conveyor can be swung can be adjusted, thereby to vary the vertical and/or horizontal displacement of the discharge end of the conveyor.

## Claims

1. A mobile storage wagon (10) having a frame (11), a storage hopper (13) mounted on the frame (11), and a discharge arrangement (15) to discharge the contents of the hopper to a required discharge location spaced outwardly of the wall (14) of the hopper (13), in which:
(a) the discharge arrangement comprises an endless conveyor (15) having an upper run (16) which is guided between opposed return ends (17, 18), a first of which is intended to form a receiving end (17) to receive the contents of the hopper and a second of which is intended to form the discharge end (18) of the conveyor; and
(b) the conveyor (15) is carried by a mounting body (21) which is adjustably mounted on the frame (11) of the wagon (10), in such a way that it is guided to move in a direction generally lengthwise of the conveyor in order to adjust the height of the discharge end (18) of the endless conveyor (15) and the lateral simultaneous spacing of said discharge end (18) from the wall (14) of the hopper (13).

2. A wagon according to claim 1, in which the endless conveyor (15) is reversible, so that either of the return ends (17, 18) can form the discharge end, subject to adjustment of the position of the return end so that it projects from one side of the hopper (13).

3. A wagon according to claim 2, in which the discharge conveyor (15) can be adjusted in a direction transverse to the direction of forward travel of the wagon (10), in which case each return end (17, 18) is capable of moving through a respective outlet opening in the opposed side walls of the hopper (13).

4. A wagon according to any one of claims 1 to 3, in which the return end which forms the receiving end (17) can be adjusted to a position at or near to the centre (23) of the base of the hopper (13) so as to receive the hopper contents.

5. A wagon according to claim 4, including an internal wall or flap (24, 25) in the hopper (13) which is moveable to a position in which it blocks possible exit for the hopper contents via the receiving end (17) of the conveyor.

6. A wagon according to claim 5, in which the moveable internal wall (24, 25) is arranged to be moveable automatically to its blocking position as a consequence of movement of the conveyor (15) to a particular discharge position.

7. A wagon according to any one of the preceding claims, in which a curved guiding means (22) is provided on the frame (11) of the wagon along which the mounting body (21) is slidable in order to guide the adjustment movement of the conveyor and thereby effect simultaneous adjustment of (a) the height of the discharge end (18) of the endless conveyor and (b) the lateral spacing of said discharge end (18) for the wall (14) of the hopper.

8. A wagon according to claim 7, in which the upper and lower runs (16, 19) of the endless conveyor (15) are constrained to follow curved paths of generally similar curvature to a curved displacement path of the conveyor.

9. A wagon according to claim 7 or 8, in which a conveyor-carrying frame (21) which forms said mounting body of the conveyor (15) has generally the same curvature as the curved guideway (22), so as to make smooth sliding engagement therewith substantially throughout the length of the conveyor during conveyor adjustment.

10. A wagon according to any one of the preceding claims, in which each return end (17, 18) of the endless conveyor (15) is connected to a respective lever operated mechanism (26) which is capable of effecting automatic movement of one of a pair of closure flaps (24, 25) to a position blocking exit for hopper contents via the receiving end of the conveyor.

## Patentansprüche

1. Mobiler Speicherwagen (10), der einen Rahmen (11), einen Speichertrichter bzw. ein Speichersilo (13), welcher bzw. welches auf dem Rahmen (11) angebracht ist, und eine Entladungsanordnung (15) zum Entladen des Inhalts des Trichters bzw. Silos an einen erforderlichen Entladungsort, welcher auswärts von der Wand (14) des Trichters bzw. Silos (13) mit Zwischenraum angeordnet ist, hat, worin:
(a) die Entladungsanordnung einen Endlosförderer (15) umfasst, der einen oberen Verlauf (16) hat, welcher zwischen entgegengesetzten Rückführungsenden (17, 18) geführt ist, von denen ein erstes dazu bestimmt ist, ein Aufnahmeende (17) zum Aufnehmen des Inhalts des Trichters bzw. Silos zu bilden, und von denen ein zweites dazu bestimmt ist, das Entladungsende (18) des Föderers zu bilden; und
(b) der Förderer (15) durch einen Anbringungskörper (21) getragen ist, welcher auf dem Rahmen (11) des Wagens (10) in einer solchen Art und Weise einstellbar angebracht ist, dass er zur Bewegung in einer Richtung generell längsweise des Förderers geführt wird, um die Höhe des Entladungsendes (18) des Endlosförderers (15) und die laterale gleichzeitige Beabstandung des Entladungsendes (18) von der Wand (14) des Trichters bzw. Silos (13) einzustellen.

2. Wagen gemäß Anspruch 1, worin der Endlosförderer (15) umkehrbar ist, so dass jedes der Rückführungsenden (17, 18), abhängig von der Einstellung der Position des Rückführungsendes so, dass es von einer Seite des Trichters bzw. Silos (13) vorsteht, das Entladungsende bilden kann.

3. Wagen gemäß Anspruch 2, worin der Entladungsförderer (15) in einer Richtung quer zu der Richtung der Vorwärtsbewegung des Wagens (10) eingestellt werden kann, in welchem Falle jedes Rückführungsende (17, 18) fähig ist, sich durch eine jeweilige Auslassöffnung in den entgegengesetzten Seitenwänden des Trichters bzw. Silos (13) zu bewegen.

4. Wagen gemäß irgendeinem der Ansprüche 1 bis 3, worin das Rückführungsende, welches das Aufnahmeende (17) bildet, in eine Position an oder nahe der Mitte (23) der Basis des Trichters bzw. Silos (13) so eingestellt werden kann, dass es den Inhalt des Trichters bzw. Silos aufnimmt.

5. Wagen gemäß Anspruch 4, umfassend eine innere Wand oder Klappe (24, 25) in dem Trichter bzw. Silo (13), welche zu einer Position bewegbar ist, worin sie den möglichen Austritt für den Trichter- bzw. Siloinhalt über das Aufnahmeende (17) des Förderers blockiert.

6. Wagen gemäß Anspruch 5, worin die bewegbare Innenwand (24, 25) so angeordnet bzw. eingerichtet ist, dass sie infolge der Bewegung des Förderers (15) zu einer speziellen Entladungsposition automatisch in ihre Blockierungsposition bewegbar ist.

7. Wagen gemäß irgendeinem der vorhergehenden Ansprüche, worin ein gekrümmtes Führungsmittel (22) auf dem Rahmen (11) des Wagens vorgesehen ist, längs dessen der Anbringungskörper (21) verschiebbar ist, um die Einstellbewegung des Förderers zu führen und dadurch eine gleichzeitige Einstellung von (a) der Höhe des Entladungsendes (18) des Endlosförderers und (b) der lateralen Beabstandung des Entladungsendes (18) von der Wand (14) des Trichters bzw. Silos zu bewirken.

8. Wagen gemäß Anspruch 7, worin der obere und untere Verlauf (16, 19) des Endlosförderers (15) gezwungen sind, gekrümmten Wegen von generell gleichartiger Krümmung zu einem gekrümmten Verlagerungsweg des Förderers zu folgen.

9. Wagen gemäß Anspruch 7 oder 8, worin ein den Förderer tragender Rahmen (21), welcher den Anbringungskörper des Förderers (15) bildet, generell die gleiche Krümmung wie der gekrümmte Führungsweg (22) hat, so dass er in glattem Gleitbzw. Verschiebeeingriff damit im wesentlichen über die gesamte Länge des Förderers während der Einstellung des Förderers ist.

10. Wagen gemäß irgendeinem der vorhergehenden Ansprüche, worin jedes Rückführungsende (17, 18) des Endlosförderers (15) mit einem jeweiligen hebelbetätigten Mechanismus (26) verbunden ist, welcher fähig ist, eine automatische Bewegung von einer aus einem Paar von Verschlussklappen (24, 25) zu einer Position zu bewirken, in welcher der Austritt für Trichter- bzw. Siloinhalt über das Aufnahmeende des Förderers blockiert ist.

## Revendications

1. Wagon de stockage mobile (10) comportant un châssis (11), une trémie de stockage (13) montée sur le châssis (11) et un système de déchargement (15) pour décharger le contenu de la trémie dans un emplacement de déchargement requis placé à l'extérieur de la paroi (14) de la trémie (13), dans laquelle :
(a) le système de déchargement comprend un convoyeur sans fin (15) présentant une partie supérieure (16) qui est guidée entre des extrémités de retour opposées (17, 18), une première extrémité étant prévue pour former une extrémité de réception (17) pour recevoir le contenu de la trémie et une deuxième étant prévue pour former l'extrémité de déchargement (18) du convoyeur ; et
(b) le convoyeur (15) est supporté par un corps de support (21) qui est fixé, de manière réglable, sur le châssis (11) du wagon (10) de telle sorte qu'il est guidé pour se déplacer généralement dans le sens de la longueur du convoyeur afin de régler la hauteur de l'extrémité de déchargement (18) du convoyeur sans fin (15) et l'espacement simultané latéral de ladite extrémité de déchargement (18) par rapport à la paroi (14) de la trémie (13).

2. Wagon selon la revendication 1, selon lequel le convoyeur sans fin (15) est réversible, de telle sorte que chacune des extrémités de retour (17, 18) peut former l'extrémité de déchargement, à condition de régler la position de l'extrémité de retour de telle sorte qu'elle se projette à partir d'un côté de la trémie (13).

3. Wagon selon la revendication 2, selon lequel le convoyeur de déchargement (15) peut être réglé dans un sens transversal par rapport au sens de déplacement vers l'avant du wagon (10), auquel cas chaque extrémité de retour (17, 18) peut se déplacer dans une ouverture de sortie correspondante dans les parois latérales opposées de la trémie (13).

4. Wagon selon l'une quelconque des revendications 1 à 3, selon lequel l'extrémité de retour qui forme l'extrémité de réception (17) peut être réglée à une position située au niveau du centre (23) de la base de la trémie (13), ou prés de ce centre (23), de manière à recevoir le contenu de la trémie.

5. Wagon selon la revendication 4, comprenant une paroi ou un volet interne (24, 25) dans la trémie (13) qui peut se déplacer vers une position dans laquelle il bloque la sortie du contenu de la trémie via l'extrémité de réception (17) du convoyeur.

6. Wagon selon la revendication 5, selon lequel la paroi ou le volet interne mobile (24, 25) est prévu pour se déplacer automatiquement vers sa position de blocage par suite d'un déplacement du convoyeur (15) vers une position de déchargement particulière.

7. Wagon selon l'une quelconque des revendications précédentes, selon lequel un moyen de guidage incurvé (22) est prévu sur le châssis (11) du wagon le long duquel le corps de support (21) peut coulisser pour guider le déplacement de réglage du convoyeur et ainsi assurer le réglage simultanément (a) de la hauteur de l'extrémité de déchargement (18) du convoyeur sans fin et (b) de l'espacement latéral de ladite extrémité de déchargement (18) par rapport à la paroi (14) de la trémie.

8. Wagon selon la revendication 7, selon lequel les parties supérieure et inférieure (16, 19) du convoyeur sans fin (15) sont obligées de suivre les trajectoires incurvées dont la courbure est généralement la même que celle de la trajectoire de déplacement incurvée du convoyeur.

9. Wagon selon la revendication 7 ou la revendication 8, selon lequel un châssis de support de convoyeur (21) qui forme ledit corps de support du convoyeur (15) présente généralement la même courbure que la glissière incurvée (22) de manière à assurer une mise en prise par coulissement sans à coup avec cette dernière sur toute la longueur du convoyeur pendant le réglage de ce convoyeur.

10. Wagon selon l'une quelconque des revendications précédentes, selon lequel chaque extrémité de retour (17, 8) du convoyeur sans fin (15) est reliée à un mécanisme correspondant actionné par levier (26) qui peut assurer un déplacement automatique de l'un des deux volets de fermeture (24, 25) vers une position bloquant la sortie du contenu de la trémie via l'extrémité de réception du convoyeur.
